(19) Europäisches Patentamt / European Patent Office / Office européen des brevets

(11) **EP 4 317 063 A1**

(12) **EUROPEAN PATENT APPLICATION**
published in accordance with Art. 153(4) EPC

(43) Date of publication:
**07.02.2024 Bulletin 2024/06**

(21) Application number: **22775519.6**

(22) Date of filing: **22.03.2022**

(51) International Patent Classification (IPC):
$C01B\ 32/949^{(2017.01)}$  $C01B\ 19/04^{(2006.01)}$
$C01B\ 25/08^{(2006.01)}$  $C01B\ 33/06^{(2006.01)}$

(52) Cooperative Patent Classification (CPC):
**C01B 19/04; C01B 25/08; C01B 32/949;
C01B 33/06**

(86) International application number:
**PCT/JP2022/012951**

(87) International publication number:
**WO 2022/202735 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2021 JP 2021050482**

(71) Applicant: **DIC CORPORATION
Itabashi-ku
Tokyo 174-8520 (JP)**

(72) Inventors:
• **TABUCHI, Minoru
  Sakura-shi, Chiba 285-8668 (JP)**
• **HATSUSAKA, Kazuaki
  Sakura-shi, Chiba 285-8668 (JP)**
• **YUAN, Jianjun
  Sakura-shi, Chiba 285-8668 (JP)**

(74) Representative: **Kraus & Lederer
Patentanwälte PartGmbB
Thomas-Wimmer-Ring 15
80539 München (DE)**

(54) **MOLYBDENUM COMPOUND AND METHOD FOR PRODUCING SAME**

(57) A molybdenum compound is represented by a general formula $MoX_a$ (in the formula, X is a Group 14 element, a Group 15 element, or a Group 16 element, and a is 0.5, 1, or 2), has the number of functional groups per unit area of 10 per $nm^2$ or less when X is the Group 14 element in the general formula $MoX_a$, has the number of functional groups per unit area of 100 per nm2 or less when X is the Group 15 element or the Group 16 element in the general formula MoXa, and has a particle diameter of 10 nm or more and less than 1,000 nm.

**EP 4 317 063 A1**

**Description**

Technical Field

The present invention relates to a molybdenum compound and a production method therefor.

The present application claims priority based on Japanese Patent Application No. 2021-050482, filed on March 24, 2021, the content of which is incorporated herein.

Background Art

Inorganic nanoparticles are materials expected to be applied in a variety of fields. In particular, inorganic nanoparticles may exhibit high activity in applications such as catalysts due to their large specific surface area. However, the specific surface area being large can be counterproductive from the viewpoint of material design. For example, in compatibility between inorganic nanoparticles and organic materials, the larger the specific surface area of inorganic nanoparticles, the more the compatibility with organic materials reduces. Meanwhile, inorganic materials, which have superior heat resistance and lightfastness compared to organic materials, are expected to exhibit properties that cannot be expressed by organic materials or inorganic materials alone when mixed with organic materials, and the issue of the compatibility between inorganic nanoparticles and organic materials is an important issue in material development.

In general, inorganic nanoparticles have low compatibility with organic materials. Examples of methods usually performed to increase the compatibility include surface modification of inorganic nanoparticles. This technique involves modifying the surface of inorganic nanoparticles with organic materials to increase the compatibility with organic materials. For example, PTL 1 describes inorganic nanoparticles surface-modified by the sol-gel method.

Citation List

Patent Literature

PTL 1: JP-A-2008-44835

Summary of Invention

Technical Problem

However, the inventors of the present invention have conducted studies to find that a possible reason for the low compatibility of inorganic nanoparticles with organic materials is the effect of functional groups on the surface of inorganic nanoparticles. In oxide nanoparticles in particular, their surfaces are covered with functional groups such as hydroxy groups, thus causing the inorganic nanoparticles to have a highly hydrophilic surface state. Thus, there have been a problem of low compatibility with organic materials, which are highly hydrophobic.

The present invention has been made in view of the above circumstances, and an object of the present invention is to provide inorganic nanoparticles having good compatibility with organic materials.

Solution to Problem

The present invention includes the following aspects.

(1) A molybdenum compound represented by a general formula $MoX_a$ (in the formula, X is a Group 14 element, a Group 15 element, or a Group 16 element, and a is 0.5, 1, or 2), having the number of functional groups per unit area on a surface of the molybdenum compound of 10 per $nm^2$ or less when X is the Group 14 element in the general formula $MoX_a$, having the number of functional groups per unit area on the surface of the molybdenum compound of 100 per $nm^2$ or less when X is the Group 15 element or the Group 16 element in the general formula $MoX_a$, and having a particle diameter of 10 nm or more and less than 1,000 nm.
(2) The molybdenum compound according to (1), in which when X is the Group 14 element in the general formula $MoX_a$, X is C and a is 0.5 or 1, or X is Si and a is 2, when X is the Group 15 element in the general formula $MoX_a$, X is N or P and a is 1 or 2, and when X is the Group 16 element in the general formula $MoX_a$, X is S, Se, or Te and a is 2.
(3) The molybdenum compound according to (1) or (2), in which the functional groups are hydroxy groups. (4) A method for producing the molybdenum compound according to any one of (1) to (3), the method including heating molybdenum trioxide particles having an average particle diameter of primary particles of 5 nm or more and less than 1,000 nm at 400°C to 1,500°C in the presence of a Group 14 element, a Group 15 element, or a Group 16 element. Advantageous Effects of Invention

The present invention can provide inorganic nanoparticles having good compatibility with organic materials.

Brief Description of Drawings

FIG. 1 is a schematic view of an example of an apparatus used for producing molybdenum trioxide particles as a raw material of molybdenum sulfide particles.
FIG. 2 shows XRD spectra of molybdenum compounds according to Examples.

Description of Embodiments

The following describes embodiments of the present invention in detail with reference to the accompanying drawings.

<Molybdenum Compound>

The molybdenum compound according to the present embodiment is represented by a general formula $MoX_a$. In the general formula $MoX_a$, X is a Group 14 element, a Group 15 element, or a Group 16 element, and a is 0.5, 1, or 2.

In the general formula $MoX_a$, examples of the Group 14 element in X include C, Si, Ge, Sn, and Pb. Among these, the Group 14 element in X is preferably C or Si from the viewpoint of applicability to various types of materials, safety, and raw material costs. MoC compounds can be used for catalysts, cemented carbide additives, and the like. MoSi compounds can be used for super heat-resistant materials, thermoelectric conversion materials, and the like.

When X is C in the general formula $MoX_a$, a is preferably 0.5 or 1 from the viewpoint of the stability of the molybdenum compound and the like.

When X is Si in the general formula $MoX_a$, a is preferably 2 from the viewpoint of the stability of the molybdenum compound and the like.

In the general formula $MoX_a$, examples of the Group 15 element in X include N, P, As, Sb, and Bi. Among these, the group 15 element in X is preferably N or P because of their low toxicity and is particularly preferably P because of its easy handling.

When X is P in the general formula $MoX_a$, a is preferably 1 or 2.

In the general formula $MoX_a$, examples of the Group 16 element in X include O, S, Se, and Te. Among these, the Group 16 element in X is preferably S, Se, or Te. When X is S, Se, or Te, a transition metal dichalcogenide (TMD) is obtained as the molybdenum compound. TMD is a material expected to be applied in the future in a variety of fields such as electricity, environment, and energy.

When X is S, Se, or Te in the general formula $MoX_a$, a is preferably 2 from the viewpoint of the stability of the molybdenum compound and the like.

In the molybdenum compound according to the present embodiment, when X is the Group 14 element in the general formula $MoX_a$, the number of functional groups per unit area is 10 per $nm^2$ or less, preferably 8 per $nm^2$ or less, and more preferably 7 per $nm^2$ or less.

When X is the Group 14 element in the general formula $MoX_a$, when the number of functional groups per unit area is 10 per $nm^2$ or less, the surface energy of the particles of the molybdenum compound can be reduced, and thus the compatibility of the molybdenum compound with organic materials can be enhanced.

In the molybdenum compound according to the present embodiment, when X is the Group 15 element or the Group 16 element in the general formula $MoX_a$, the number of functional groups per unit area is 100 per $nm^2$ or less, preferably 80 per $nm^2$ or less, and more preferably 70 per $nm^2$ or less.

When X is the Group 15 element or the Group 16 element in the general formula $MoX_a$, when the number of functional groups per unit area is 100 per $nm^2$ or less, the surface energy of the particles of the molybdenum compound can be reduced, and thus the compatibility of the molybdenum compound with organic materials can be enhanced.

In the present embodiment, the number of functional groups per unit area on the surface of the molybdenum compound is measured by, for example, the following method.

(Method for Measuring Number of Functional Groups per Unit Area)

Blank measurement: To 20 ml of pure water, 0.5 g of sodium chloride is added as a stabilizer, and the pH of the liquid is set to about 4 with hydrochloric acid. A 0.01 N aqueous sodium hydroxide solution is gradually added thereto to make the pH about 9, which is the endpoint. The amount of the aqueous sodium hydroxide solution required at this time is defined as $V_{blank}$.

Sample measurement: A sample of the molybdenum compound was accurately weighed in an amount of about 0.05 g, and 20 ml of pure water was added thereto. Sodium chloride in an amount of 0.5 g is added to dissolve. Hydrochloric acid is used to achieve the same pH as that of the blank. This solution is titrated with 0.01 N sodium hydroxide to achieve the same pH as that of the endpoint of the blank. The amount of the aqueous sodium hydroxide solution required at this time is designated as V.

The number of functional groups per unit area: The above values are substituted into the following equation to calculate the number of functional groups per unit area. For the value of the specific surface area, one measured with a BET specific surface area meter in advance is used. Number of functional groups per unit area (number of functional groups/$nm^2$) = 6.023f (V-$V_{blank}$)/WA, where f represents the factor of the aqueous sodium hydroxide solution, W the sample weight, and A the specific surface area.

The factor f of the aqueous sodium hydroxide solution is determined by the following equation.

$$f = [\text{true concentration of standard solution}$$
$$(\text{determined by standardization})]/(\text{indicated concentration of}$$
$$\text{prepared standard solution})$$

In general, surface functional groups tend to become hydroxy groups due to moisture in the air. Thus, in the present embodiment, the number of functional groups per unit area on the surface of the molybdenum compound is preferably based on the number of hydroxy groups from the viewpoint of using it as a barometer of the compatibility of the molybdenum compound with organic materials.

The molybdenum compound according to the present embodiment has a particle diameter of 10 nm or more and less than 1,000 nm, preferably 15 nm or more and 800 nm or less, and more preferably 20 nm or more and 500 nm or less.

When the particle diameter of the molybdenum compound is 10 nm or more, it is easier to increase crystallinity and to exhibit its performance. If the particle diameter is less than 10 nm, it becomes difficult to obtain highly crystalline particles, making it difficult to obtain high performance. On the other hand, when the particle diameter of the molybdenum compound is less than 1,000 nm, the surface energy of the particles of the molybdenum compound can be reduced, and thus the compatibility of the molybdenum compound with organic materials can be enhanced. If the particle diameter is greater than 1,000 nm, compatibility is higher, but the specific surface area of the particles becomes very small, making it difficult to obtain high performance.

In the present embodiment, for the particle diameter of the molybdenum compound, length measurement with an electron microscope such as a transmission electron microscope (TEM) is performed for randomly selected 50 particles, and the average of the values is defined as the particle diameter. For example, the particle diameter of the molybdenum compound can be measured by the same method as that for the average particle diameter of the primary particles of molybdenum trioxide particles described later.

The molybdenum compound of the present embodiment has a reduced number of functional groups present on the particle surface and thus has reduced surface energy of the particles. Thus, the molybdenum compound according to the present embodiment has enhanced hydrophobicity on the particle surface and thus has improved compatibility with organic materials. Thus, the molybdenum compound of the present invention exhibits excellent properties in organic-inorganic hybrid materials such as hydrogen generation catalysts, photocatalysts, fuel cell catalysts, $CO_2$ reduction catalysts, semiconductors, and thermoelectric materials.

<Method for Producing Molybdenum Compound>

The method for producing a molybdenum compound according to the present embodiment includes heating molybdenum trioxide particles having an average particle diameter of primary particles of 5 nm or more and less than 1,000 nm at 400°C to 1,500°C, preferably 500°C to 1,000°C, and more preferably 700°C to 900°C in the presence of a Group 14 element, a Group 15 element, or a Group 16 element.

By setting the heating temperature within the above range, a molybdenum compound with a reduced number of functional groups present on the particle surface can be obtained.

In the method for producing a molybdenum compound according to the present embodiment, the heating time is not particularly limited, and may be a time during which the reaction sufficiently proceeds, which may be 1 hour to 48 hours, 2 hours to 24 hours, or 4 hours to 12 hours.

In the method for producing a molybdenum compound according to the present embodiment, the average particle diameter of the primary particles of the molybdenum trioxide particles is 5 nm or more and less than 1,000 nm, preferably 5 nm or more and 500 nm or less, and more preferably 5 nm or more and 200 nm or less.

When the average particle diameter of the primary particles of the molybdenum trioxide particles is within the above range, reactivity with the Group 14 element, the Group 15 element, or the Group 16 element is likely to become good, and a molybdenum compound with a reduced number of functional groups present on the particle surface is easily obtained. In order for the number of functional groups per unit area on the surface of the molybdenum compound according to the present embodiment to be 100 per $nm^2$ or less and to enhance the compatibility of the molybdenum compound according to the present embodiment with organic materials, the average particle diameter of the primary particles of the molybdenum trioxide particles to be used as a raw material is particularly preferably 5 nm or more and 200 nm or less.

The average particle diameter of the primary particles of the molybdenum trioxide particles refers to an average value of primary particle diameters of 50 primary particles randomly selected when the molybdenum trioxide particles are photographed with a transmission electron microscope (TEM), the major axis (the Feret diameter of the longest portion observed) and the minor axis (the short Feret diameter in a direction perpendicular to the Feret diameter of the longest portion) of the minimum unit particles (that is, the primary particles) constituting aggregates on a two-dimensional image are measured, and an average value thereof is defined as the primary particle diameter. The same method can be used to measure the average particle diameter of the primary particles of the molybdenum compound according to the present embodiment.

The molybdenum trioxide particles used in the method for producing a molybdenum compound according to the present embodiment are preferably made of an aggregate of primary particles containing molybdenum trioxide having a β crystal structure. Since the molybdenum trioxide particles made of the aggregate of primary particles containing molybdenum trioxide having a β crystal structure has better reactivity with the Group 14 element, the Group 15 element, and the Group 16 element than a molybdenum trioxide powder having only α crystals as a crystal structure in the related art, and contains molybdenum trioxide having a β crystal structure, the conversion rate $R_c$ to the molybdenum compound represented by the general formula $MoX_a$ can be increased in a reaction with the Group 14 element, the Group 15 element, and the Group 16 element. In addition, functional groups such as hydroxy groups present on the surface of the molybdenum trioxide particles are unlikely to remain, thus making it easy to obtain a molybdenum compound with a reduced number of functional groups present on the particle surface.

The β crystal structure of molybdenum trioxide can be observed by the presence of a peak (in the vicinity of 2θ: 23.01°, No. 86426 (inorganic crystal structure database, ICSD)) attributed to the plane (011) of a β crystal of MoOs in a spectrum obtained by the powder X-ray diffraction (XRD) using the Cu-Kα rays as the X-ray source. The α crystal structure of molybdenum trioxide can be observed by the presence of a peak of the plane (021) (in the vicinity of 2θ: 27.32°, No. 166363 (inorganic crystal structure database, ICSD)) of an α crystal of MoOs.

In the method for producing a molybdenum compound according to the present embodiment, examples of the Group 14 element include C, Si, Ge, Sn, and Pb. Among these, the Group 14 element is preferably C or Si from the viewpoint of applicability to various types of materials, safety, and raw material costs. MoC compounds can be used for catalysts, cemented carbide additives, and the like. MoSi compounds can be used for super heat-resistant materials, thermoelectric conversion materials, and the like.

Examples of the Group 15 element include N, P, As, Sb, and Bi. Among these, the group 15 element is preferably N or P because of their low toxicity and is particularly preferably P because of its easy handling.

Examples of the Group 16 element include O, S, Se, and Te. Among these, the Group 16 element is preferably S, Se, or Te. When X is S, Se, or Te, a transition metal dichalcogenide (TMD) is obtained as the molybdenum compound. TMD is a material expected to be applied in the future in a variety of fields such as electricity, environment, and energy.

In the method for producing a molybdenum compound according to the present embodiment, the feed ratio of the amount of the Group 14 element, the Group 15 element, or the Group 16 element to the amount of $MoO_3$ in the molybdenum trioxide powder may be set under conditions under which the reaction proceeds sufficiently. With respect to 100 mol% of the amount of $MoO_3$ in the molybdenum trioxide powder, the amount of the Group 14 element, the Group 15 element, or the Group 16 element is preferably 120 mol% or more, more preferably 150 mol% or more, and still more preferably 200 mol% or more. With respect to 100 mol% of the amount of $MoO_3$ in the molybdenum trioxide powder, the amount of the Group 14 element, the Group 15 element, or the Group 16 element may be 1,000 mol% or less, 500 mol% or less, or 300 mol% or less.

In the method for producing a molybdenum compound according to the present embodiment, the molybdenum trioxide powder preferably has a MoOs content of 99.6% or more as measured by a fluorescent X-ray (XRF), whereby the conversion rate $R_c$ to the molybdenum compound represented by the general formula $MoX_a$ can be increased, and it is possible to obtain a molybdenum compound having high purity.

In the method for producing a molybdenum compound according to the present embodiment, the molybdenum trioxide powder preferably has a ratio (β (011)/α (021)) of intensity of a peak attributed to the plane (011) of the β crystal

of $MoO_3$ to intensity of a peak attributed to the plane (021) of the $\alpha$ crystal of MoOs of 0.1 or more in the spectrum obtained by the powder X-ray diffraction (XRD) using the Cu-K$\alpha$ rays as the X-ray source.

From the intensity of the peak attributed to the plane (011) of the $\beta$ crystal of MoOs and the intensity of the peak attributed to the plane (021) of the $\alpha$ crystal of MoOs, each maximum peak intensity is read to obtain the ratio ($\beta$ (011)/$\alpha$ (021)).

In the molybdenum trioxide powder, the ratio ($\beta$ (011)/$\alpha$ (021)) is preferably 0.1 to 10.0, more preferably 0.2 to 10.0, and particularly preferably 0.4 to 10.0.

The molybdenum trioxide powder preferably has a specific surface area of 10 $m^2/g$ or more and 100 $m^2/g$ or less measured by the BET method.

In the molybdenum trioxide powder, the specific surface area is preferably 10 $m^2/g$ or more, more preferably 20 $m^2/g$ or more, and still more preferably 30 $m^2/g$ or more from the viewpoint of reactivity with the Group 14 element, the Group 15 element, or the Group 16 element. In the molybdenum trioxide powder, the specific surface area is preferably 100 $m^2/g$ or less and may be 90 $m^2/g$ or less or 80 $m^2/g$ or less from the viewpoint of facilitation in production.

In the molybdenum trioxide powder, a ratio (I/II) of peak intensity I caused by Mo-O to peak intensity II caused by Mo-Mo is preferably more than 1.1 in the radial distribution function obtained from the extended X-ray absorption fine structure (EXAFS) spectrum of the K absorption edge of molybdenum.

As for the peak intensity I caused by Mo-O and the peak intensity II caused by Mo-Mo, each maximum peak intensity is read to obtain the ratio (I/II). The ratio (I/II) is considered to indicate that the $\beta$ crystal structure of MoOs is obtained in the molybdenum trioxide powder, and the greater the ratio (I/II), the better the reactivity with the Group 14 element, the Group 15 element, or the Group 16 element.

In the molybdenum trioxide powder, the ratio (I/II) is preferably 1.1 to 5.0, and may be 1.2 to 4.0 or 1.2 to 3.0.

(Method for Producing Molybdenum Trioxide Powder)

The molybdenum trioxide powder can be produced by vaporizing a molybdenum oxide precursor compound to form molybdenum trioxide vapor and cooling the molybdenum trioxide vapor.

The method for producing a molybdenum trioxide powder includes calcining a raw material mixture containing a molybdenum oxide precursor compound and a metal compound other than the molybdenum oxide precursor compound to vaporize the molybdenum oxide precursor compound and form molybdenum trioxide vapor. The ratio of the metal compound to 100% by mass of the raw material mixture is preferably 70% by mass or less in terms of oxide.

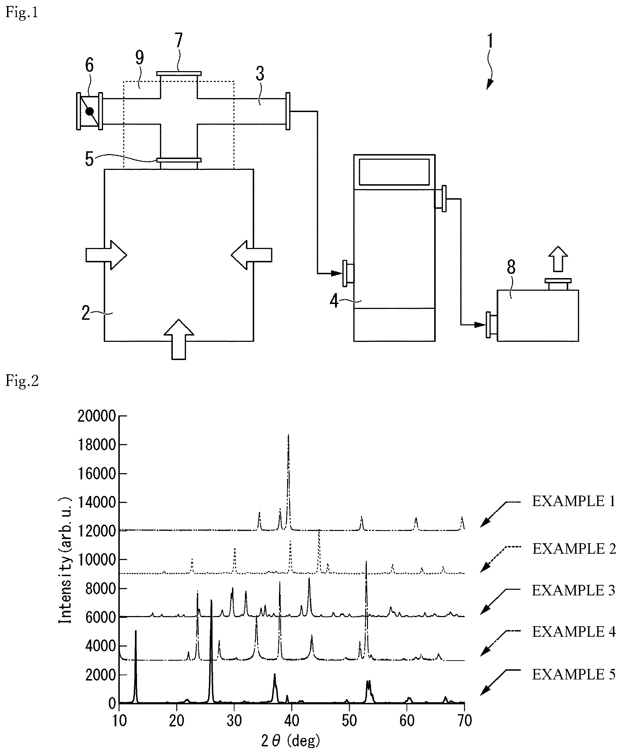

The method for producing a molybdenum trioxide powder can be suitably carried out by using a production apparatus 1 shown in FIG. 1.

FIG. 1 is a schematic view of an example of an apparatus used for producing the molybdenum trioxide powder. The production apparatus 1 includes a calcining furnace 2 for calcining a molybdenum oxide precursor compound or the raw material mixture to vaporize the molybdenum oxide precursor compound, a cross-shaped cooling pipe 3 connected to the calcining furnace 2 for powdering the molybdenum trioxide vapor vaporized by the calcining, and a collection device 4 as a collection unit for collecting the molybdenum trioxide powder powdered in the cooling pipe 3. At this time, the calcining furnace 2 and the cooling pipe 3 are connected to each other via a discharge port 5. Further, in the cooling pipe 3, an opening degree adjustment damper 6 is disposed at an outside air intake port (not shown) at a left end portion, and an observation window 7 is disposed at an upper end portion. An air exhauster 8, which is a first air blowing unit, is connected to the collection device 4. When the air exhauster 8 exhausts air, the collection device 4 and the cooling pipe 3 suction the air, and the outside air is blown into the cooling pipe 3 from the opening degree adjustment damper 6 of the cooling pipe 3. That is, the air exhauster 8 passively blows air to the cooling pipe 3 by exhibiting a suction function. In addition, the production apparatus 1 may include an external cooling device 9, which makes it possible to freely control cooling conditions for the molybdenum trioxide vapor generated from the calcining furnace 2.

The opening degree adjustment damper 6 takes in air from the outside air intake port and the molybdenum trioxide vapor vaporized in the calcining furnace 2 is cooled in an air atmosphere to obtain a molybdenum trioxide powder, whereby the ratio (I/II) can be made more than 1.1, and the $\beta$ crystal structure of $MoO_3$ can be easily obtained in the molybdenum trioxide powder. In contrast, when the molybdenum trioxide vapor is cooled in a state where an oxygen concentration in a nitrogen atmosphere is low, for example, when the molybdenum trioxide vapor is cooled using liquid nitrogen, the oxygen defect density is likely to increase and the ratio (I/II) is likely to decrease.

The molybdenum oxide precursor compound is not particularly limited as long as it is a precursor compound for forming the molybdenum trioxide powder made of an aggregate of the primary particles containing molybdenum trioxide having a $\beta$ crystal structure.

The molybdenum oxide precursor compound is not particularly limited as long as it forms molybdenum trioxide vapor by being calcined, and examples thereof include metal molybdenum, molybdenum trioxide, molybdenum dioxide, molybdenum sulfide, ammonium molybdate, phosphomolybdic acid ($H_3PMo_{12}O_{40}$), silicomolybdic acid ($H_4SiMo_{12}O_{40}$), aluminum molybdate, silicon molybdate, magnesium molybdate ($MgMo_nO_{3n+1}$ (n = 1 to 3)), sodium molybdate

($Na_2Mo_nO_{3n+1}$ (n = 1 to 3)), titanium molybdate, ferric molybdate, potassium molybdate ($K_2Mo_nO_{3n+1}$ (n = 1 to 3)), zinc molybdate, boron molybdate, lithium molybdate ($Li_2Mo_nO_{3n+1}$ (n = 1 to 3)), cobalt molybdate, nickel molybdate, manganese molybdate, chromium molybdate, cesium molybdate, barium molybdate, strontium molybdate, yttrium molybdate, zirconium molybdate, and copper molybdate. These molybdenum oxide precursor compounds may be used alone or in combination of two or more thereof. The form of the molybdenum oxide precursor compound is not particularly limited, and for example, the molybdenum oxide precursor compound may be in a powder form such as molybdenum trioxide, or may be in a liquid form such as an aqueous solution of ammonium molybdate. The molybdenum oxide precursor compound is preferably in the powder form having good handling properties and good energy efficiency.

As the molybdenum oxide precursor compound, commercially available $\alpha$-crystal molybdenum trioxide is preferably used. Further, when ammonium molybdate is used as the molybdenum oxide precursor compound, the ammonium molybdate is converted by calcining into molybdenum trioxide that is thermodynamically stable, and thus the molybdenum oxide precursor compound to be vaporized becomes molybdenum trioxide.

Among these molybdenum oxide precursor compounds, molybdenum trioxide is preferably contained from the viewpoint of easily controlling the purity of the obtained molybdenum trioxide powder, the average particle diameter of the primary particles, and the crystal structure.

The molybdenum trioxide vapor can also be formed by calcining a raw material mixture containing a molybdenum oxide precursor compound and a metal compound other than the molybdenum oxide precursor compound.

The metal compound other than the molybdenum oxide precursor compound is not particularly limited, and examples thereof include an aluminum compound, a silicon compound, a titanium compound, a magnesium compound, a sodium compound, a potassium compound, a zirconium compound, an yttrium compound, a zinc compound, a copper compound, and an iron compound. Among these, it is preferable to use an aluminum compound, a silicon compound, a titanium compound, or a magnesium compound.

The molybdenum oxide precursor compound and the metal compound other than the molybdenum oxide precursor compound may form an intermediate, but even in this case, the intermediate is decomposed by calcining, and molybdenum trioxide can be vaporized in a thermodynamically stable form.

Among these compounds used as the metal compound other than the molybdenum oxide precursor compound, an aluminum compound is preferably used to prevent damage to a calcining furnace, and the metal compound other than the molybdenum oxide precursor compound may not be used to improve the purity of the molybdenum trioxide powder.

Examples of the aluminum compound include aluminum chloride, aluminum sulfate, basic aluminum acetate, aluminum hydroxide, boehmite, pseudo-boehmite, transition aluminum oxides ($\gamma$-aluminum oxide, $\delta$-aluminum oxide, $\theta$-aluminum oxide, etc.), $\alpha$-aluminum oxide, and a mixed aluminum oxide having two or more crystal phases.

When a raw material mixture containing a molybdenum oxide precursor compound and a metal compound other than the molybdenum oxide precursor compound is calcined, the content of the molybdenum oxide precursor compound is preferably 40% by mass to 100% by mass, and may be 45% by mass to 100% by mass or 50% by mass to 100% by mass with respect to 100% by mass of the raw material mixture.

The calcining temperature varies depending on the molybdenum oxide precursor compound, the metal compound, and the like to be used, and the desired molybdenum trioxide powder, and is usually preferably a temperature at which the intermediate can be decomposed. For example, since aluminum molybdate can be formed as an intermediate when a molybdenum compound is used as the molybdenum oxide precursor compound and an aluminum compound is used as the metal compound, the calcining temperature is preferably 500°C to 1,500°C, more preferably 600°C to 1,550°C, and still more preferably 700°C to 1,600°C.

The calcining time is not particularly limited, and may be, for example, 1 minute to 30 hours, 10 minutes to 25 hours, or 100 minutes to 20 hours.

The temperature rising rate varies depending on the molybdenum oxide precursor compound and the metal compound to be used, and the properties of the desired molybdenum trioxide powder, and is preferably 0.1°C/min or more and 100°C/min or less, more preferably 1°C/min or more and 50°C/min or less, and still more preferably 2°C/min or more and 10°C/min or less from the viewpoint of production efficiency.

The internal pressure in the calcining furnace is not particularly limited, and may be a positive pressure or a reduced pressure, but from the viewpoint of suitably discharging the molybdenum oxide precursor compound from the calcining furnace to the cooling pipe, the calcining is preferably performed under a reduced pressure. Specifically, the degree of pressure reduction is preferably -5,000 Pa to -10 Pa, more preferably -2,000 Pa to -20 Pa, and still more preferably -1,000 Pa to -50 Pa. When the degree of pressure reduction is -5,000 Pa or more, high airtightness and mechanical strength of the calcining furnace are not excessively required, and production costs can be reduced, which is preferable. When the degree of pressure reduction is -10 Pa or less, clogging of the molybdenum oxide precursor compound at a discharge port of the calcining furnace can be prevented, which is preferable.

When a gas is blown into the calcining furnace during calcining, the temperature of the blown gas is preferably 5°C to 500°C, and more preferably 10°C to 100°C.

Further, the blowing speed of the gas is preferably 1 L/min or more and 500 L/min or less, and more preferably 10 L/min or more and 200 L/min or less with respect to 100 L of an effective volume of the calcining furnace.

The temperature of the vaporized molybdenum trioxide vapor varies depending on the type of the molybdenum oxide precursor compound to be used, and is preferably 200°C to 2,000°C, and more preferably 400°C to 1,500°C. When the temperature of the vaporized molybdenum trioxide vapor is 2,000°C or lower, usually, the vapor tends to be easily powdered by blowing outside air (0°C to 100°C) to the cooling pipe.

The discharge rate of the molybdenum trioxide vapor discharged from the calcining furnace can be controlled based on the amount of the molybdenum oxide precursor compound to be used, the amount of the metal compound to be used, the temperature of the calcining furnace, blowing of the gas into the calcining furnace, and the diameter of the discharge port of the calcining furnace. The discharge rate also varies depending on the cooling capacity of the cooling pipe, and the discharge rate of the molybdenum trioxide vapor discharged from the calcining furnace to the cooling pipe is preferably 0.001 g/min or more and 100 g/min or less, and more preferably 0.1 g/min or more and 50 g/min or less.

Further, the content of the molybdenum trioxide vapor contained in the gas discharged from the calcining furnace is preferably 0.01 g/min or more and 1,000 mg/L or less, and more preferably 1 g/min or more and 500 mg/Lg/min or less.

Next, the molybdenum trioxide vapor is cooled to be powdered.

The molybdenum trioxide vapor is cooled by lowering the temperature of the cooling pipe. In this case, examples of a cooling method include cooling by blowing a gas into the cooling pipe as described above, cooling by a cooling mechanism included in the cooling pipe, and cooling by an external cooling device.

The molybdenum trioxide vapor is preferably cooled in an air atmosphere. When the molybdenum trioxide vapor is cooled in an air atmosphere to form a molybdenum trioxide powder, the ratio (I/II) can be made more than 1.1, and the $\beta$ crystal structure of $MoO_3$ can be easily obtained in the molybdenum trioxide powder.

The cooling temperature (temperature of the cooling pipe) is not particularly limited, and is preferably -100°C to 600°C, and more preferably -50°C to 400°C.

The cooling rate of the molybdenum trioxide vapor is not particularly limited, and is preferably 100°C/s or more and 100,000°C/s or less, and more preferably 1,000°C/s or more and 50,000°C/s or less. As the cooling rate of the molybdenum trioxide vapor increases, a molybdenum trioxide powder having a small particle diameter and a large specific surface area tends to be obtained.

When the cooling is performed by blowing a gas into the cooling pipe, the temperature of the blown gas is preferably -100°C to 300°C, and more preferably -50°C to 100°C.

Further, the blowing speed of the gas is preferably 0.1 $m^3$/min or more and 20 $m^3$/min or less, and more preferably 1 $m^3$/min or more and 10 $m^3$/min or less. When the blowing speed of the gas is 0.1 $m^3$/min or more, a high cooling rate can be achieved, and clogging in the cooling pipe can be prevented, which is preferable. In contrast, when the blowing speed of the gas is 20 $m^3$/min or less, the first air blowing unit (such as an air exhauster) which is expensive is no longer needed, and production costs can be reduced, which is preferable.

The powder obtained by cooling the molybdenum trioxide vapor is transported to the collection device for collection.

In the method for producing a molybdenum trioxide powder, the powder obtained by cooling the molybdenum trioxide vapor may be calcined again at a temperature of 100°C to 320°C.

That is, the molybdenum trioxide powder obtained by the method for producing a molybdenum trioxide powder may be calcined again at a temperature of 100°C to 320°C. The calcining temperature in the re-calcining may be 120°C to 280°C or 140°C to 240°C. A calcining time in the re-calcining may be, for example, 1 minute to 4 hours, 10 minutes to 5 hours, or 100 minutes to 6 hours. However, a part of the $\beta$ crystal structure of molybdenum trioxide disappears due to re-calcining, and when calcining is performed at a temperature of 350°C or higher for 4 hours, the $\beta$ crystal structure of the molybdenum trioxide powder disappears, the ratio ($\beta$ (011)/$\alpha$ (021)) is 0, and the reactivity with the Group 14 element, the Group 15 element, or the Group 16 element is impaired.

The method for producing a molybdenum compound according to the present embodiment can produce a molybdenum compound with a reduced number of functional groups present on the particle surface. In addition, the method for producing a molybdenum compound according to the present embodiment has the advantages of being capable of mass production, eliminating the need for equipment involving hazards such as becoming high pressure, and eliminating the need for steps of washing, drying, and the like.

[Examples]

Next, the invention will be described in more detail with reference to Examples, but the invention is not limited by these Examples.

[Method for Measuring Average Particle Diameter of Primary Particles of Molybdenum Trioxide Powder and Molybdenum Compound]

Molybdenum trioxide particles constituting a molybdenum trioxide powder or molybdenum compound particles constituting a molybdenum compound powder were dispersed in ethanol and were photographed with a transmission electron microscope (TEM). The major axis (the Feret diameter of the longest portion observed) and the minor axis (the short Feret diameter in a direction perpendicular to the Feret diameter of the longest portion) of the minimum unit particles (that is, primary particles) constituting independent particles or aggregates on a two-dimensional image were measured, and an average value thereof was defined as the primary particle diameter. The same operation was performed on 50 primary particles randomly selected, and the average particle diameter of the primary particles was calculated based on the average value of the primary particle diameters of these primary particles.

[Crystal Structure Analysis: XRD Method]

A sample of the molybdenum compound obtained in each of Examples was filled in a holder for a measurement sample having a depth of 0.5 mm, set in a wide-angle X-ray diffraction (XRD) apparatus (Ultima IV manufactured by Rigaku Corporation), and was subjected to measurement under conditions of Cu/K$\alpha$ rays, 40 kV/40 mA, a scanning speed of 2°/min, and a scanning range of 10° or more and 70° or less.

[Measurement of Specific Surface Area: BET Method]

A sample of the molybdenum trioxide powder or the molybdenum sulfide powder was measured with a specific surface area meter (BELSORP-mini manufactured by MicrotracBEL), and the surface area per gram of the sample measured based on the amount of the adsorbed nitrogen gas by the BET method was calculated as the specific surface area ($m^2$/g).

[Number of Hydroxy Groups per Unit Area on Surface of Molybdenum Compound]

Blank measurement: To 20 ml of pure water, 0.5 g of sodium chloride was added as a stabilizer, and the pH of the liquid was set to about 4 with hydrochloric acid. A 0.01 N aqueous sodium hydroxide solution was gradually added thereto to make the pH about 9, which was the endpoint. The amount of the aqueous sodium hydroxide solution required at this time was defined as $V_{blank}$.
Sample measurement: A sample of the molybdenum compound obtained in each of Examples and Comparative Examples was accurately weighed in an amount of about 0.05 g, and 20 ml of pure water was added thereto. Sodium chloride in an amount of 0.5 g was added to dissolve. Hydrochloric acid was used to achieve the same pH as that of the blank. This solution was titrated with 0.01 N sodium hydroxide to achieve the same pH as that of the endpoint of the blank. The amount of the aqueous sodium hydroxide solution required at this time was designated as V.
Calculation of the number of hydroxy groups per unit area: The above values were substituted into the following equation to calculate the number of hydroxy groups per unit area. For the value of the specific surface area, one measured with a BET specific surface area meter in advance was used.

$$\text{Surface hydroxy group density (number of hydroxy groups/nm}^2) = 6.023f(V - V_{blank})/WA$$

where f represents the factor of the aqueous sodium hydroxide solution, W the sample weight, and A the specific surface area.
The factor f of the aqueous sodium hydroxide solution is determined by the following equation.

$$f = [\text{true concentration of standard solution (determined by standardization)}]/(\text{indicated concentration of prepared standard solution})$$

(Production of Molybdenum Trioxide Powder)

A calcining furnace equivalent to a heat-resistant container, a cooling pipe provided with an outside air supply port, and a dust collector for collecting molybdenum oxides were prepared. A mixture of 1 kg of molybdenum trioxide (manufactured by Taiyo Koko Co., Ltd.) and 2 kg of aluminum hydroxide (Wako Pure Chemical Corporation) was charged into a sagger, and the calcining furnace, the cooling pipe, and the dust collector were connected to each other. The temperature was raised up to 1,300°C in the calcining furnace and was maintained for 10 hours to obtain $\alpha$-alumina, and molybdenum trioxide was vaporized in the calcining furnace. Next, to molybdenum trioxide vaporized from the discharge port of the calcining furnace, a large excess of air compared to the amount of molybdenum trioxide was blown through the outside air supply port of the cooling pipe so as to give a cooling rate of 2,000°C/second, thereby rapidly cooling molybdenum trioxide to 200°C or lower to be powdered, and 900 g of molybdenum trioxide 1 was obtained by the dust collector. According to TEM length measurement, the average primary particle diameter was 20 nm.

[Example 1] Synthesis of Molybdenum Carbide ($Mo_2C$)

Mixed together using a mortar were 0.5 g of molybdenum trioxide 1, 0.25 g of Ketjen black (EC300J manufactured by Lion Specialty Chemicals Co., Ltd.), 0.38 g of sodium chloride, and 0.38 g of potassium chloride for 1 minute, which were then charged into a crucible and were calcined at 850°C for 4 hours in a nitrogen atmosphere. After natural cooling, the calcined product was washed with ion exchanged water to remove excess Ketjen black and salts. According to XRD measurement, the product was molybdenum carbide. Surface hydroxy group measurement was performed by acid-base titration to show that the number of hydroxy groups per unit area (surface functional group density) was 6.5 per $nm^2$. According to TEM length measurement, the average primary particle diameter was 30 nm.

[Example 2] Synthesis of Molybdenum Silicide ($MoSi_2$)

Mixed together were 0.5 g of molybdenum trioxide 1, 0.4 g of metal silicon powder, and 0.5 g of metal magnesium, which were charged into a crucible and were calcined at 900°C for 6 hours in a nitrogen atmosphere. After natural cooling, the calcined product was washed with 0.1 M hydrochloric acid. According to XRD measurement, the product was molybdenum silicide.
Surface hydroxy group measurement was performed by acid-base titration to show that the number of hydroxy groups per unit area (surface functional group density) was 3.9 per $nm^2$. According to TEM length measurement, the average primary particle diameter was 70 nm.

[Example 3] Synthesis of Molybdenum Phosphide ($MoP/MoP_2$)

Mixed together were 0.5 g of molybdenum trioxide 1, 0.47 g of red phosphorus powder (a reagent manufactured by Kanto Chemical Co., Inc.), and 1.0 g of zinc chloride, which were then charged into a crucible and were calcined at 700°C for 4 hours in a nitrogen atmosphere. After natural cooling, the calcined product was washed with ion exchanged water. According to XRD measurement, the product was molybdenum phosphide.
Surface hydroxy group measurement was performed by acid-base titration to show that the number of hydroxy groups per unit area (surface functional group density) was 45.5 per $nm^2$. According to TEM length measurement, the average primary particle diameter was 120 nm.

[Example 4] Synthesis of Molybdenum Selenide ($MoSe_2$)

Mixed together were 0.5 g of molybdenum trioxide 1, 1.1 g of selenium powder (a reagent manufactured by Kanto Chemical Co., Inc.), 0.56 g of sodium phosphinate monohydrate, 1.0 g of sodium chloride, and 1.0 g of potassium chloride, which were then charged into a crucible and were calcined at 850° C for 4 hours in a nitrogen atmosphere. After natural cooling, the calcined product was washed with ion exchanged water. According to XRD measurement, the product was molybdenum selenide.
Surface hydroxy group measurement was performed by acid-base titration to show that the number of hydroxy groups per unit area (surface functional group density) was 60.1 per $nm^2$. According to TEM length measurement, the average primary particle diameter was 350 nm.

[Example 5] Synthesis of Molybdenum Telluride ($MoTe_2$)

Mixed together were 0.5 g of molybdenum trioxide 1, 0.89 g of tellurium powder (a reagent manufactured by Aldrich), 0.56 g of sodium phosphinate monohydrate, 1.0 g of sodium chloride, and 1.0 g of potassium chloride, which were then charged into a crucible and were calcined at 900° C for 4 hours in a nitrogen atmosphere. After natural cooling, the calcined product was washed with ion exchanged water. According to XRD measurement, the product was molybdenum telluride.

Surface hydroxy group measurement was performed by acid-base titration to show that the number of hydroxy groups per unit area (surface functional group density) was 26.3 per $nm^2$. According to TEM length measurement, the average primary particle diameter was 110 nm.

Crystal structure analysis by the XRD method was conducted for each molybdenum compound obtained in Examples 1 to 5. FIG. 1 illustrates XRD spectra of the respective molybdenum compounds obtained in Examples 1 to 5.

[Comparative Examples 1 to 5]

Molybdenum compounds were produced in the same manner as in Examples 1 to 5 except that a commercially available micron-sized molybdenum trioxide was used instead of molybdenum trioxide 1. Table 2 lists the results of the number of hydroxy groups per unit area (surface functional group density). Table 2 also lists the average primary particle diameters of the respective molybdenum compounds by TEM length measurement.

[Table 1]

| | Unit | Example 1 | Example 2 | Example 3 | Example 4 | Example 5 |
|---|---|---|---|---|---|---|
| Particle composition | | $Mo_2C$ | $MoSi_2$ | $MoP/MoP_2$ | $MoSe_2$ | $MoTe_2$ |
| Average primary particle diameter | nm | 30 | 70 | 120 | 350 | 110 |
| Surface functional group density | Functional groups/nm2 | 6.5 | 3.9 | 45.5 | 60.1 | 26.3 |
| Molybdenum trioxide (nano-sized) | g | 0.5 | 0.5 | 0.5 | 0.5 | 0.5 |
| Molybdenum trioxide (micron-sized) | g | | | | | |
| Ketjen black | g | 0.25 | | | | |
| Metal silicon powder | g | | 0.4 | | | |
| Metal magnesium | g | | 0.5 | | | |
| Red phosphorus powder | g | | | 0.47 | | |
| Selenium powder | g | | | | 1.1 | |
| Tellurium powder | g | | | | | 0.89 |
| Sodium phosphinate monohydrate | g | | | | 0.56 | 0.56 |
| NaCl | g | 0.38 | | | 1 | 1 |
| KCl | g | 0.38 | | | 1 | 1 |
| ZnCl | g | | | 1 | | |
| Calcining temperature/in $N_2$ | °C | 850 | 900 | 700 | 850 | 900 |
| Calcining time | hr | 4 | 6 | 4 | 4 | 4 |

[Table 2]

| | Unit | Comp Example 1 | Comp Example 2 | Comp Example 3 | Comp Example 4 | Comp Example 5 |
|---|---|---|---|---|---|---|
| Particle composition | | $Mo_2C$ | $MoSi_2$ | $MoP/MoP_2$ | $MoSe_2$ | $MoTe_2$ |

(continued)

| | Unit | Comp Example 1 | Comp Example 2 | Comp Example 3 | Comp Example 4 | Comp Example 5 |
|---|---|---|---|---|---|---|
| Average primary particle diameter | nm | 1,300 | 3,000 | 1,500 | 2,800 | 2,100 |
| Surface functional group density | Functional groups/nm2 | 13.7 | 20.9 | 185.0 | 240.2 | 140.1 |
| Molybdenum trioxide (nano-sized) | g | | | | | |
| Molybdenum trioxide (micron-sized) | g | 0.5 | 0.5 | 0.5 | 0.5 | 0.5 |
| Ketjen black | g | 0.25 | | | | |
| Metal silicon powder | g | | 0.4 | | | |
| Metal magnesium | g | | 0.5 | | | |
| Red phosphorus powder | g | | | 0.47 | | |
| Selenium powder | g | | | | 1.1 | |
| Tellurium powder | g | | | | | 0.89 |
| Sodium phosphinate monohydrate | g | | | | 0.56 | 0.56 |
| NaCl | g | 0.38 | | | 1 | 1 |
| KCl | g | 0.38 | | | 1 | 1 |
| ZnCl | g | | | 1 | | |
| Calcining temperature/in $N_2$ | °C | 850 | 900 | 700 | 850 | 900 |
| Calcining time | hr | 4 | 6 | 4 | 4 | 4 |

[Example 6]

To the molybdenum compound ($Mo_2C$, 1 g) of Example 1, Light Acrylate L-A (Kyoeisha Chemical Co., Ltd., 10 g) was added as a UV-curable acrylate monomer, and the mixture was subjected to ultrasonic treatment for 10 minutes and was left at rest in a shaded condition. No precipitation was observed even after being left at rest for 3 days, indicating good dispersibility.

[Examples 7 to 10]

Evaluation was conducted in the same manner as in Example 6 except that the inorganic particles of Examples 2 to 5, respectively, in an amount of 1 g each were used instead of the molybdenum compound ($Mo_2C$, 1 g) of Example 1. Table 3 lists the results of dispersibility.

[Comparative Examples 6 to 10]

Evaluation was conducted in the same manner as in Example 6 except that the molybdenum compounds of Comparative Examples 1 to 5, respectively, in an amount of 1 g each were used instead of the molybdenum compound ($Mo_2C$, 1 g) of Example 1. Table 4 lists the results of dispersibility.

[Table 3]

| | Unit | Example 6 | Example 7 | Example 8 | Example 9 | Example 10 |
|---|---|---|---|---|---|---|
| Used particles | | Example 1 | Example 2 | Example 3 | Example 4 | Example 5 |
| Molybdenum compound | g | 1 | 1 | 1 | 1 | 1 |
| Light Acrylate L-A | g | 10 | 10 | 10 | 10 | 10 |
| Dispersibility | | ◎ | ◎ | ○ | ○ | ○ |
| ◎: no precipitation occurred for 3 days, ○: no precipitation occurred for 1 day, ×: precipitation occurred 1 day later | | | | | | |

[Table 4]

| | Unit | Comp Example 6 | Comp Example 7 | Comp Example 8 | Comp Example 9 | Comp Example 10 |
|---|---|---|---|---|---|---|
| Used particles | | Comp Example 1 | Comp Example 2 | Comp Example 3 | Comp Example 4 | Comp Example 5 |
| Molybdenum compound | g | 1 | 1 | 1 | 1 | 1 |
| Light Acrylate L-A | g | 10 | 10 | 10 | 10 | 10 |
| Dispersibility | | ○ | ○ | × | × | × |
| ◎: no precipitation occurred for 3 days, ○: no precipitation occurred for 1 day, ×: precipitation occurred 1 day later | | | | | | |

Industrial Applicability

Since the molybdenum compound of the present invention has a reduced number of functional groups present on the particle surface, the hydrophobicity of the surface of the molybdenum compound is enhanced, resulting in improved compatibility with organic materials. Thus, the molybdenum compound of the present invention exhibits excellent properties in organic-inorganic hybrid materials such as hydrogen generation catalysts, photocatalysts, fuel cell catalysts, $CO_2$ reduction catalysts, semiconductors, and thermoelectric materials.

Preferred examples of the present invention have been described, but the invention is not limited to these examples. Additions, omissions, substitutions, and other modifications in configuration can be made without departing from the gist of the present invention. The present invention is not limited by the foregoing description but limited only by the scope of the appended claims.

Reference Signs List

1    production apparatus
2    calcining furnace
3    cooling pipe
4    collection device
5    discharge port
6    opening degree adjustment damper
7    observation window
8    air exhauster
9    external cooling device

Claims

1.   A molybdenum compound represented by a general formula $MoX_a$ (in the formula, X is a Group 14 element, a Group 15 element, or a Group 16 element, and a is 0.5, 1, or 2),

    having number of functional groups per unit area on a surface of the molybdenum compound of 10 per $nm^2$ or less when X is the Group 14 element in the general formula $MoX_a$,
having number of functional groups per unit area on the surface of the molybdenum compound of 100 per $nm^2$ or less when X is the Group 15 element or the Group 16 element in the general formula $MoX_a$, and
having a particle diameter of 10 nm or more and less than 1,000 nm.

**2.** The molybdenum compound according to claim 1, wherein

    when X is the Group 14 element in the general formula $MoX_a$, X is C and a is 0.5 or 1, or X is Si and a is 2,
when X is the Group 15 element in the general formula $MoX_a$, X is N or P and a is 1 or 2, and
when X is the Group 16 element in the general formula $MoX_a$, X is S, Se, or Te and a is 2.

**3.** The molybdenum compound according to claim 1 or 2, wherein the functional groups are hydroxy groups.

**4.** A method for producing the molybdenum compound according to any one of claims 1 to 3, the method comprising heating molybdenum trioxide particles having an average particle diameter of primary particles of 5 nm or more and less than 1,000 nm at 400°C to 1,500°C in presence of a Group 14 element, a Group 15 element, or a Group 16 element.

Fig.1

Fig.2

| INTERNATIONAL SEARCH REPORT | International application No. |
|---|---|
| | **PCT/JP2022/012951** |

**A. CLASSIFICATION OF SUBJECT MATTER**

*C01B 32/949*(2017.01)i; *C01B 19/04*(2006.01)i; *C01B 25/08*(2006.01)i; *C01B 33/06*(2006.01)i
FI: C01B32/949 ZNM; C01B33/06; C01B25/08 E; C01B19/04 B; C01B19/04 G

According to International Patent Classification (IPC) or to both national classification and IPC

**B. FIELDS SEARCHED**

Minimum documentation searched (classification system followed by classification symbols)

C01B32/949; C01B19/04; C01B25/08; C01B33/06

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2012-079773 A (DAINIPPON PRINTING CO., LTD.) 19 April 2012 (2012-04-19) claims 1-10, paragraphs [0037]-[0042] | 1-4 |
| A | WO 2019/181723 A1 (DAINIPPON INK & CHEMICALS INC.) 26 September 2019 (2019-09-26) entire text, all drawings | 1-4 |
| A | JP 2019-501107 A (HUBEI ZHONG'AO NANOTECH CO., LTD.) 17 January 2019 (2019-01-17) entire text, all drawings | 1-4 |
| A | CN 109110816 A (CHINA UNIVERSITY OF PETROLEUM (EAST CHINA)) 01 January 2019 (2019-01-01) entire text, all drawings | 1-4 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/012951**

| Patent document cited in search report | | | Publication date (day/month/year) | Patent family member(s) | | | Publication date (day/month/year) |
|---|---|---|---|---|---|---|---|
| JP | 2012-079773 | A | 19 April 2012 | (Family: none) | | | |
| WO | 2019/181723 | A1 | 26 September 2019 | US | 2021/0053037 | A1 | |
| | | | | entire text, all drawings | | | |
| | | | | EP | 3770120 | A1 | |
| | | | | CN | 111886203 | A | |
| | | | | KR | 10-2020-0130807 | A | |
| JP | 2019-501107 | A | 17 January 2019 | US | 2018/0346344 | A1 | |
| | | | | entire text, all drawings | | | |
| | | | | WO | 2017/092712 | A1 | |
| | | | | CN | 105347400 | A | |
| CN | 109110816 | A | 01 January 2019 | (Family: none) | | | |

Form PCT/ISA/210 (patent family annex) (January 2015)

**REFERENCES CITED IN THE DESCRIPTION**

**Patent documents cited in the description**

- JP 2021050482 A
- JP 2008044835 A